# EUROPEAN PATENT APPLICATION

(11) **EP 1 890 435 A1**
(43) Date of publication of application: **20.02.2008**
(21) Application number: 06766467.2
(22) Date of filing: 07.06.2006
(51) Int. Cl.: H04L 12/56

(54) **ROUTE SETTING METHOD AND ROUTE MANAGEMENT DEVICE**

(30) Priority: 09.06.2005 JP 2005169983
(71) Applicant: MATSUSHITA ELECTRIC INDUSTRIAL CO., LTD, Kadoma-shi, Osaka 571-8501 (JP)
(72) Inventor: HORI, Takako, Matsushita Electric Industrial Co., Ltd., 2-1-61,Shiromi, Chuo-ku, Osaka 540-6207 (JP); HIRANO, Jun, Matsushita Electric Industrial Co., Ltd., 2-1-61,Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/311441
(87) International publication number: WO 2006/132281

(57) **Abstract**

A technology is disclosed in which a QoS path related to a mobile terminal is established via an aggregation domain. When the QoS path is modified in accompaniment to the movement of the mobile terminal, a crossover node present within the aggregation domain is discovered. According to the technology, when a new QoS path is established between a QNE (local terminal) 101 and a QNE (partner terminal) 501, a QNE 303 near a subnet 301 to which the QNE (local terminal) is connected after moving transmits a message towards the QNE (partner terminal). At this time, a message is transmitted to find a QNE present at a location at which QoS paths for aggregation before and after the movement of the QNE (local terminal)separate, between QNEs (a QNE 305 and a QNE 211) positioned on an edge of an aggregation domain 227. A QNE 209 recognizes that the QNE itself is the crossover node upon receiving the message. The QNE adds its own IP address to the message and transfers the message.

## Description

### TECHNICAL FIELD

The present invention relates to a path setting method and a path management device in which the path setting method is used during a handover of a mobile terminal (mobile node) performing wireless communication to set a path (such as a QoS path) used by the mobile node. In particular, the present invention relates to a path setting method and a path management device in which the path setting method is used during a handover of a mobile node performing wireless communication using mobile Internet Protocol version 6 (IPv6) to set a path used by the mobile node. The mobile IPv6 is a next-generation Internet protocol.

### BACKGROUND ART

A technology using mobile IPv6, which is a next-generation Internet protocol, is becoming popular as a technology for providing seamless communication network connection to a user accessing a communication network, such as the Internet, from a mobile terminal (mobile node) via a wireless network, even while the user is moving (refer to Non-Patent Document 1 below).

At the same time, a Next Step in Signaling Working Group (NSIS WG) of the Internet Engineering Task Force (IETF) is currently discussing standardization of a new protocol called NSIS. The NSIS is expected to have a particularly positive effect on various additional services, such a QoS (quality of service) guarantee, in a mobile environment. Documents describing conditions and realization methods for realizing the QoS guarantee and mobility support through the NSIS are available.

A concept of flow aggregation is one QoS path establishing method related to the above-described NSIS (refer to Non-Patent Document 2, below) . In flow aggregation, a method is used in which different flows are aggregated and managed between certain QoS NSIS entities (QNE) . To realize this method, a flow identifier (also referred to as flow information or filter information) is required in an area in which the aggregation is performed (aggregation domain) . The flow identifier uniquely identifies the aggregate flow.

When, for example, a Diffserv domain is present within a network, the aggregation is performed between an entrance and an exit of the Diffserv domain (aggregation domain) . In Non-Patent Document 2, it is presumed that the QNE at the entrance and the QNE at the exit of the aggregation domain has knowledge of both the inside (such as the Diffserv) and the outside (a network recognized as an end-to-end communication) of the domain.

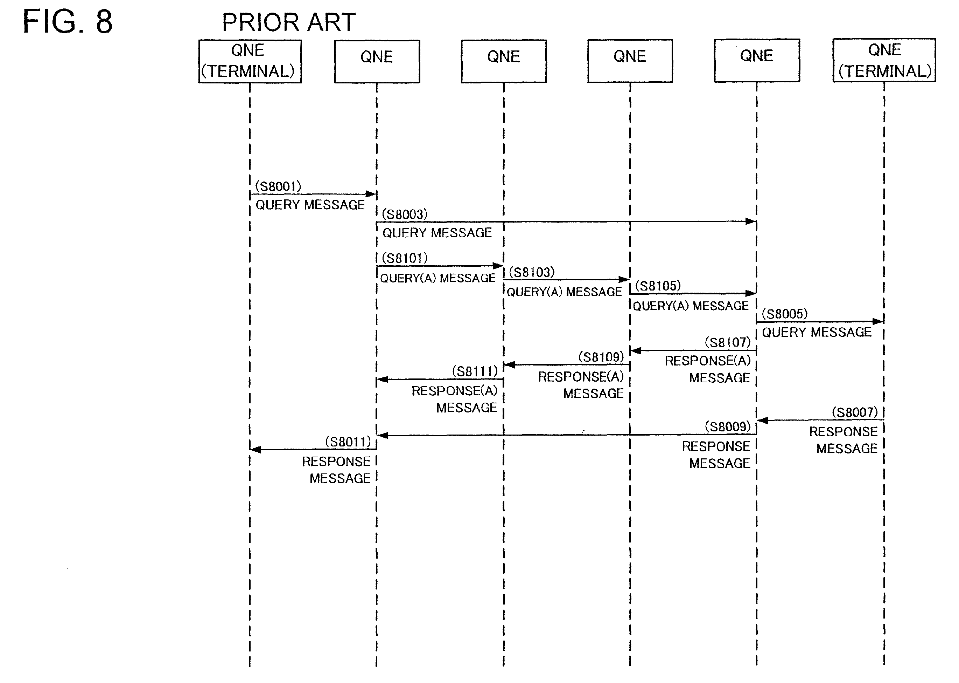

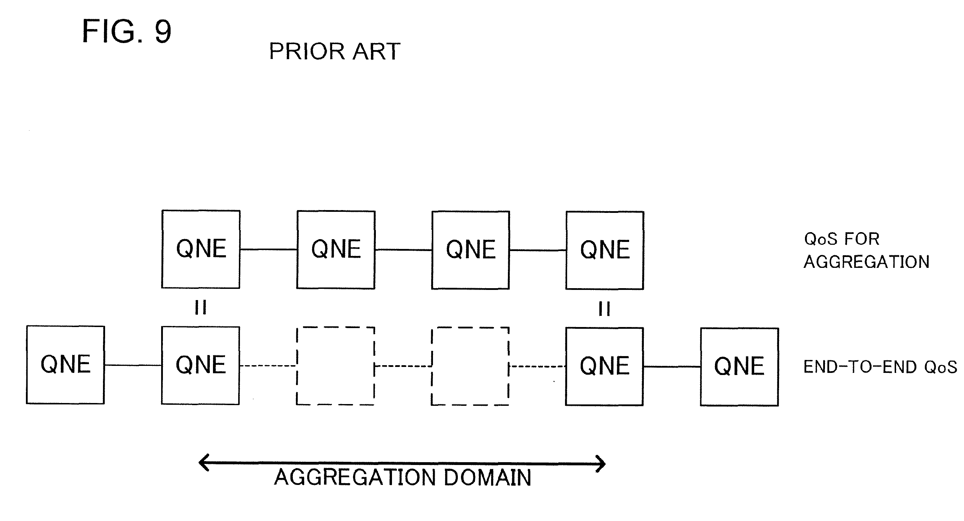

Hereafter, an overview of a QoS path aggregation based on a conventional technology will be described, with reference to Fig. 8 and Fig. 9. The aggregation is simultaneously performed when, for example, a QoS path is established. For example, when an end-to-end QoS path is formed between QNEs via an aggregation domain, a signaling message is transferred, as shown in Fig. 8 (Step S8001 to S8011), to form the end-to-end QoS path between QNEs supporting end-to-end QoS. At the same time, in the aggregation domain, a signaling message to form a QoS path for aggregation is transferred (Step S8101 to S8111).

In other words, according to the conventional technology, the signaling message to form the end-to-end QoS path is transmitted such as to skip QNEs that have no knowledge of the network outside (in other words, the QNEs within the aggregation domain) (for example, the QNE at the entrance of the aggregation domain adds a flag that enables the QNEs within the aggregation domain to ignore the message and the QNE at the exit removes the flag.) Within the aggregation domain, a signaling message to form a different QoS path for aggregation is sent between the entrance and the exit of the aggregation domain.

As a result, as shown in Fig. 9, a QoS path is established end-to-end and in the aggregation domain. The QoS paths both supplement a QoS path between terminals. At this time, the QoS path is established end-to-end. At the same time, within the aggregation domain, the QoS path for aggregation uses an identifier differing from a flow identifier of the end-to-end QoS path. In addition, regarding a session identifier, binding information of the session indicating a relationship between the session identifier indicating the end-to-end QoS path and a session identifier indicating the QoS path for aggregation is added. The aggregation operation is performed within the network. Therefore, a terminal performing communication normally cannot know that the aggregation is being performed.

At the same time, when at least one of the terminals performing communication is a mobile terminal, according to the NSIS WG, the QoS is required to be provided without short interruptions by the QoS path being established in advance, before the terminal moves. At this time, a double reservation of resources is also required to be prevented by a segment being designated between the QoS path established before movement and the QoS path established after movement, in which the two paths overlap. Furthermore, an availability status of end-to-end path resources is required to be obtained in advance, before a resource reservation message is transmitted.

To meet these requirements, the NSIS WG is currently making various proposals. For example, a following method is proposed in the Non-Patent Document 3, below. Before a terminal moves, a message including a session identifier and a flow identifier currently being used is transmitted to a proxy in a subnet that is the destination. The proxy adds the message including the session identifier and the flow identifier to a message to obtain a resource availability status. The proxy transmits the message over a path over which a QoS path is to be newly formed. As a result, a QNE at which the QoS path before movement and the QoS path after movement begin to overlap is identified at the same time the resource availability status of the path is obtained. A path is newly established and updated using this crossover node (CRN). When the QoS path is modified according to the movement of the terminal, as described above, a QNE equivalent to a branching point between the QoS path before the movement of the mobile terminal and the QoS path after the movement (in other words, a QNE positioned on a path of a packet transmitted and received between terminals and of which only one among a transfer source and a transfer destination of the packet is modified) is referred to as the CRN.
Non-Patent Document 1: Johnson, D. B., Perkins, C. E., and Arkko, J., "Mobility Support in IPv6" , RFC3775, June 200 4.
Non-Patent Document 2: Sven Van den Bosch, Georgios Karagi annis and Andrew McDonald "NSLP for Quality-of-Service si gnaling" , draft-ietf-nsis-qos-nslp-06.txt, February 2005 Non-Patent Document 3: Toyoki Ue, Takako Sanda and Kouichi Honma "QoS Mobility Support with Proxy-assisted Fast Cro ssover Node Discovery" WPMC2004, September 2004

However, when the QoS path established through the aggregation domain is modified in accompaniment to the movement of the mobile terminal and the CRN is identified using the technology described in Non-Patent Document 3, the QNE identified as the CRN is a QNE outside of the aggregation domain (including edges of the aggregation domain).

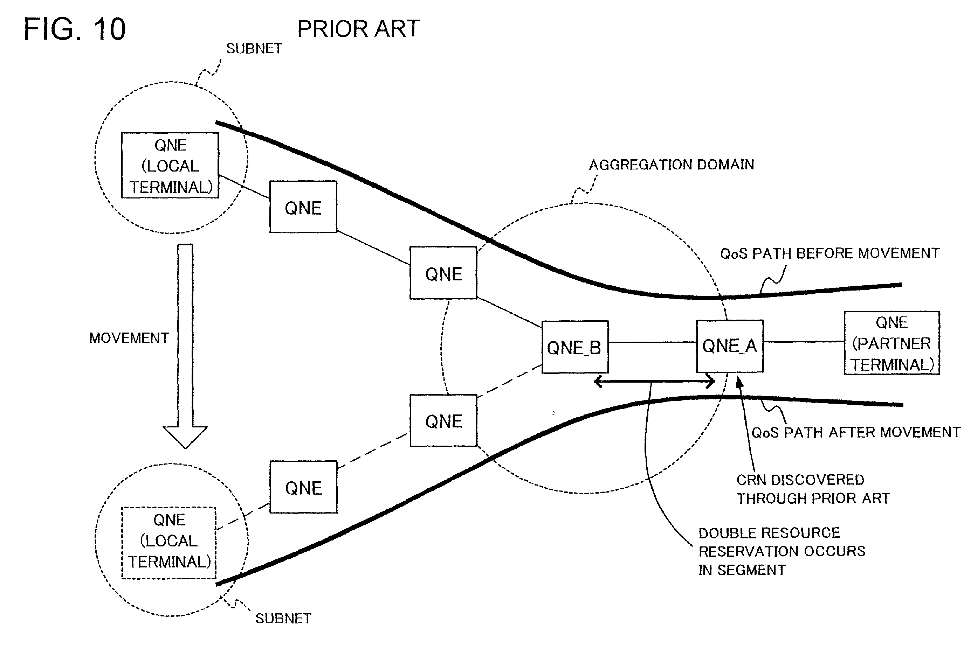

For example, as shown in Fig. 10, even when the CRN according to the QoS paths before and after movement is present within the aggregation domain (in other words, the CRN is QNE_B in Fig. 10), according to the conventional technology, QNE_A present on the edge of the aggregation domain is acknowledged as the CRN. A double reservation of resources occurs in a segment between the QNE_A and the QNE_B.

### DISCLOSURE OF THE INVENTION

The present invention has been achieved in light of the above-described problems. An object of the present invention is to, when a QoS path related to a mobile terminal is established via an aggregation area (aggregation domain) and the QoS path is modified in accompaniment with the movement of the mobile terminal, discover a CRN present within the aggregation area and establish an efficient QoS path in which a double reservation of resources does not occur.

In order to achieve the object, a path setting method of the present invention is a path setting method used when, when an end-to-end path established between two communication terminals of which at least one terminal is a mobile terminal passes through an aggregation area and the end-to-end path is connected in the aggregation area by an aggregation path, the mobile terminal performs a handover and a new end-to-end path between the two communication terminals is established. The path setting method includes a step at which a path managing device that is one endpoint of a second aggregation path transmits a crossover node retrieval message towards a path managing device that is another endpoint of the second aggregation path. The path managing device transmits the message to find a crossover node that is positioned within the aggregation area and is of a first aggregation path established before a movement of the mobile terminal and the second aggregation path established after the movement of the mobile terminal.
As a result of the configuration, a QoS path related to the mobile terminal is established via the aggregation area. When the QoS path is modified in accompaniment to the movement of the mobile terminal, the CRN present within the aggregation area can be discovered and an efficient QoS path in which a double reservation of resources does not occur can be established.

In addition, to the above-described path setting method, the path setting method of the invention includes a step at which a node within the aggregation area judges whether the node itself is the crossover node of the first aggregation path and the second aggregation path upon receiving the retrieval message. The path setting method also includes a step at which, when judged that the node itself is applicable as the crossover node, the node within the aggregation area adds its own identifying information to the retrieval message and transmits the retrieval message towards the path managing device that is the other endpoint of the second aggregation path.
As a result of the configuration, the node that is the crossover node can be determined as a result of the node within the aggregation area that has judged that the node itself is the crossover node adding its own identifying information to the retrieval message.

In order to achieve the object, a path managing device of the invention is a path managing device that, when a mobile terminal using an end-to-end path that passes through an aggregation area and is connected by a first aggregation path moves and a new end-to-end path is established, is one endpoint of a new second aggregation path within the aggregation area that connects the new end-to-end path and is positioned on an edge of the aggregation area. The path managing device includes a message transmitting means that transmits a crossover node retrieval message towards a path managing device that is another endpoint of the second aggregation path. The message transmitting means transmits the crossover node retrieval message to find a crossover node that is positioned within the aggregation area and is of a first aggregation path established before a movement of the mobile terminal and the second aggregation path established after the movement of the mobile terminal.
As a result of the configuration, the QoS path related to the mobile terminal is established via the aggregation area. When the QoS path is modified in accompaniment to the movement of the mobile terminal, the node positioned on the edge of the aggregation area can perform an operation to discover the CRN present within the aggregation area.

In addition to the above-described path managing device, in the path managing device of the invention, the retrieval message includes path identifying information for identifying the first aggregation path.
As a result of the configuration, the path identifying information for identifying the QoS path before the movement of the mobile terminal can be added to the retrieval message. A desired QoS path can be designated.

In order to achieve the object, a path managing device of the invention is a path managing device that, when a mobile terminal using an end-to-end path that passes through an aggregation area and is connected by a first aggregation path moves and a new end-to-end path is established, is one endpoint of a new second aggregation path within the aggregation area that connects the new end-to-end path and is positioned on an edge of the aggregation area. The path managing device includes a message receiving means that receives a crossover node retrieval message from a path managing device that is another endpoint of the second aggregation path. The message receiving means receives the crossover node retrieval message to find a crossover node that is positioned within the aggregation area and is of a first aggregation path established before a movement of the mobile terminal and the second aggregation path established after the movement of the mobile terminal. The path managing device also includes a crossover identifying means that extracts identifying information of a path managing device applicable as the crossover node added to the retrieval message by the path managing device.
As a result of the configuration, the QoS path related to the mobile terminal is established via the aggregation area. When the QoS path is modified in accompaniment to the movement of the mobile terminal, the CRN present within the aggregation area can be discovered and an efficient QoS path in which a double reservation of resources does not occur can be established.

In order to achieve the object, a path managing device of the invention is a path managing device that is positioned within an aggregation area. The path managing device includes a message receiving means that, when a mobile terminal using an end-to-end path that passes through the aggregation area and is connected by a first aggregation path moves and a new end-to-end path is established, receives a retrieval message for retrieving a crossover node. The crossover node is of the first aggregation path established before the movement of a mobile terminal and a second aggregation path established after the movement of the mobile terminal. The retrieval message is transmitted by a path managing device that is one endpoint of the new second aggregation path within the aggregation area connecting the new end-to-end path and is positioned on an edge of the aggregation area. The path managing device also includes a judging means that judges whether the path managing device itself is applicable as the crossover node of the first aggregation path and the second aggregation path upon receiving the retrieval message. The path managing device also includes an identifying information adding means that adds its own identifying information to the retrieval message when judged by the judging means that the path managing device itself is applicable as the crossover node. The path managing device also includes a message transferring means that transfers the retrieval message to which its own identifying information has been added towards a path managing device that is another endpoint of the second aggregation path.
As a result of the configuration, the QoS path related to the mobile terminal is established via the aggregation area. When the QoS path is modified in accompaniment to the movement of the mobile terminal, the CRN present within the aggregation area can be discovered and an efficient QoS path in which a double reservation of resources does not occur can be established.

In addition to the above-described path managing device, the path managing device according to the invention includes a path information storing means that stores path information related to an aggregation path passing through the path managing device itself. The judging means references path identifying information for identifying the first aggregation path included in the retrieval message. When confirmation is made that path information related to the first aggregation path included in the retrieval message is stored in the path information storing means, the identifying information adding means adds its own identifying information to the retrieval message.
As a result of the configuration, the path managing device can recognize whether the path managing device itself is the crossover node by referencing path information, such as resource reservation held for QoS path management.

In addition to the above-described path managing device, in the path managing device according to the invention, when the identifying information is already added to the retrieval message by another path managing device, the message transferring means transfers the retrieval message without the identifying information being added to the retrieval message by the identifying information adding means.
As a result of the configuration, even when a segment exists in which the QoS paths before and after the movement of the mobile terminal overlap, the identifying information is added to the retrieval message only by the crossover node.

The present invention is configured as described above and has the following advantageous effects. The QoS path related to the mobile terminal is established via the aggregation area. In addition, when the QoS path is modified in accompaniment to the movement of the mobile terminal, the CRN present within the aggregation area can be discovered and an efficient QoS path in which a double reservation of resources does not occur can be established.

### BRIEF DESCRIPTION OF THE DRAWINGS

Fig. 1 is an example of a network configuration shared between a first embodiment and a second embodiment of the present invention;
Fig. 2 is an example of a configuration of a QNE that is an endpoint in a downstream end of a new QoS path for aggregation established after a movement of a QNE (local terminal) according to the first embodiment of the invention;
Fig. 3 is an example of a configuration of a QNE that is a relay point in the new QoS path for aggregation established after the movement of the QNE (local terminal) according to the first embodiment of the invention;
Fig. 4 is an example of a configuration of a QNE that is an endpoint in an upstream end of the new QoS path for aggregation established after the movement of the QNE (local terminal) according to the first embodiment of the invention;
Fig. 5 is a sequence chart of an example of an operation according to the first embodiment of the invention;
Fig. 6 is an example of a configuration of a QNE (partner terminal) that is a communication partner of a QNE (local terminal) according to the second embodiment of the invention;
Fig. 7 is a sequence chart of an example of an operation according to the second embodiment of the invention;
Fig. 8 is a sequence chart explaining an overview of QoS path aggregation based on a conventional technology;
Fig. 9 is a diagram explaining an overview of the QoS path aggregation based on the conventional technology; and
Fig. 10 is an example of a network configuration for explaining problems of the conventional technology.

### BEST MODE FOR CARRYING OUT THE INVENTION

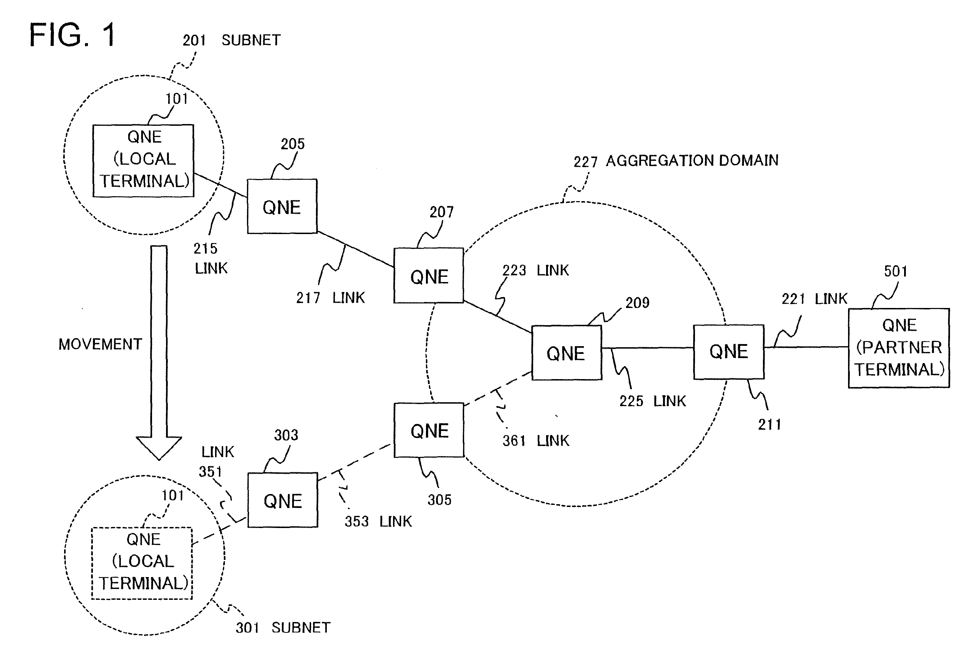

Hereinafter, embodiments of the present invention will be described with reference to the drawings. First, an example of a network configuration according to the embodiments of the invention will be described with reference to Fig. 1. Fig. 1 is an example of a network configuration shared between a first embodiment and a second embodiment of the invention.

Fig. 1 shows a state in which a QNE (local terminal) 101 within a subnet 201 and a QNE (partner terminal) 501 communicate via an aggregation domain 227. In the example shown in Fig. 1, a QNE 205, a QNE 207, a QNE 209, and a QNE 211 relay a packet transmitted and received between the QNE (local terminal) 101 and the QNE (partner terminal) 501. The QNE 207 and the QNE 211 are an entrance and an exit of the aggregation domain 227 present on the edge of the aggregation domain 227. The QNE 209 belongs within the aggregation domain 227.

The QNE 207 and the QNE 211 (in addition to a QNE 305, described hereafter) are positioned on the edge (entrance or exit) of the aggregation domain 227. The QNE 207 and the QNE 211 have knowledge of both a network within the aggregation domain 227 and a network outside of the aggregation domain 227. Therefore, a network element, such as the QNE 207, the QNE 211, and the QNE 305, positioned on the edge of the aggregation domain 227 has knowledge of both information on an end-to-end QoS path and information on a QoS path for aggregation. The network element can perform both processing of a message related to the end-to-end QoS path and processing of a message related to the QoS path for aggregation.

It is presumed that, regarding links connecting the QNE (local terminal) 101 and the QNE (partner terminal) 501, the end-to-end QoS path is already established for a link 215, a link 217, and a link 221. In relation to the end-to-end QoS path, the QoS path for aggregation is already established for a link 223 and a link 225 within the aggregation domain 227.

The QNE (local terminal) 101 is a mobile terminal and can perform a handover to move between subnets. Here, when the QNE (local terminal) 101 performs a handover from the subnet 201 to a subnet 301 and continues communication with the QNE (partner terminal) 501 via a new link will be considered.

The communication between the QNE (local terminal) 101 that has moved to the subnet 301 and the QNE (partner terminal) 501 is, as a result, performed via a QNE 303, the QNE 305, the QNE 209, and the QNE 211 (via a link 351, a link 353, a link 361, the link 225, and the link 221). In other words, the end-to-end QoS path is established for the link 351, the link 353, and the link 221, between the QNE (local terminal) 101 after movement and the QNE (partner terminal) 501. In relation to the end-to-end QoS path, the QoS path for aggregation is established for the link 361 and the link 225 within the aggregation domain 227. A CRN related to the communication between the QNE (local terminal) 101 and the QNE (partner terminal) 501 when the QNE (local terminal) 101 moves from the subnet 201 to the subnet 301 is, as a result, the QNE 209.

Under the premise of the network configuration shown in Fig. 1 described above, when data flows in an uplink direction (a direction from the QNE [local terminal] 101 to the QNE [partner terminal] 501) (first embodiment) and when data flows in a downlink direction (a direction from the QNE [partner terminal] 501 to the QNE [local terminal] 101) (second embodiment) will each be described hereafter.

### <First Embodiment>

A first embodiment of the invention will be described below. Here, when the data flows in the uplink direction (the direction from the QNE [local terminal] 101 to the QNE [partner terminal] 501) will be described. First, in relation to the first embodiment of the invention, an example of a configuration of each QNE shown in Fig. 1 will be described.

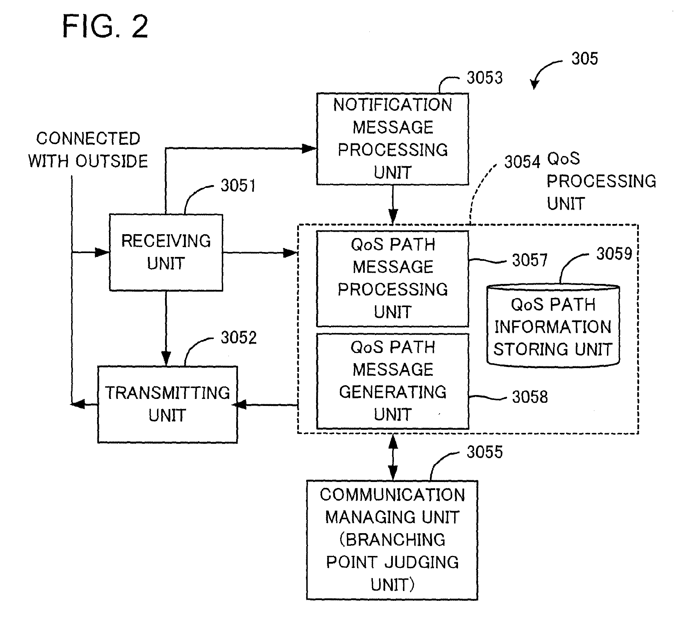

Fig. 2 is an example of a configuration of the QNE 305 according to the first embodiment of the invention. The QNE 305 is an endpoint in the downstream end of a new QoS path for aggregation established after the movement of the QNE (local terminal) 101. The QNE 305 shown in Fig. 2 includes a receiving unit 3051, a transmitting unit 3052, a notification message processing unit 3053, a QoS processing unit 3054, and a communication managing unit (a branching point judging unit) 3055. The QoS processing unit 3054 includes a QoS path message processing unit 3057, a QoS path message generating unit 3058, and a QoS path information storing unit 3059. Each function of the QNE 305 shown in Fig. 2 can be realized by hardware, software (program), or both.

The receiving unit 3051 and the transmitting unit 3052 have functions for receiving and transmitting data. Packets addressed to the QNE 305, data required to be processed by the QNE 305, and the like are processed in an upper layer. The receiving unit 3051 sends other packets to the transmitting unit 3052. The other packets are transferred as is.

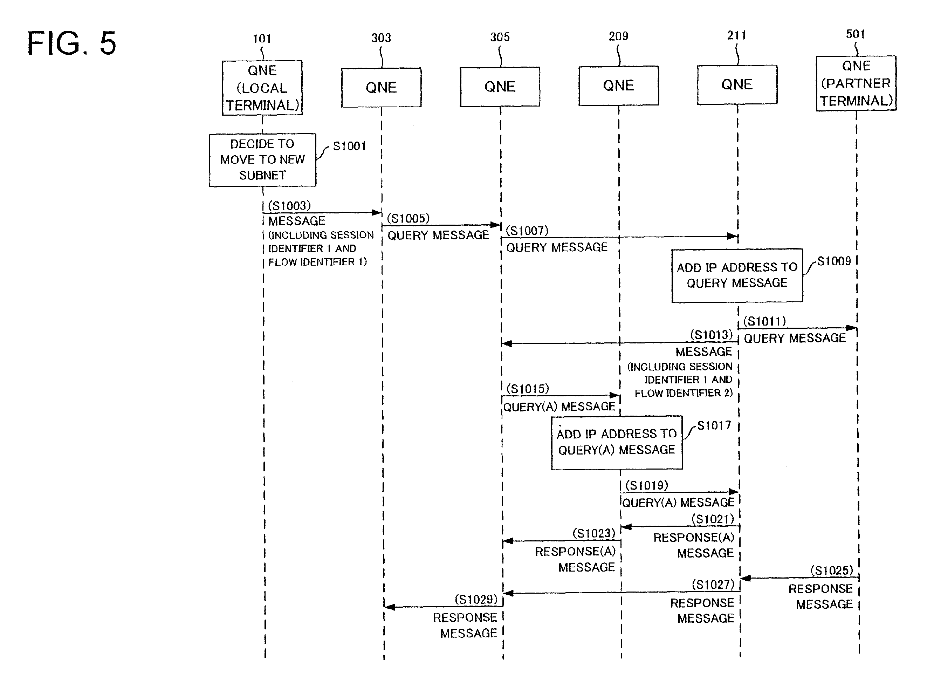

The notification message processing unit 3053 has a function for performing a process related to a notification message transmitted from the QNE 211 (a message transmitted at Step S1013 in Fig. 5, described hereafter). The notification message is for requesting preparation to establish the QoS path for aggregation. The notification message includes at least identifying information (such as a session identifier or a flow identifier) of the QoS path for aggregation related to the end-to-end QoS path established before the movement of the QNE (local terminal) 101. The notification message processing unit 3053 extracts the identifying information of the QoS path for aggregation before the movement of the QNE (local terminal) 101 from the notification message and sends the identifying information to the QoS processing unit 3054.

The QoS processing unit 3054 is a block indicating a predetermined QoS function (such as a NSIS QoS function). The QoS path message processing unit 3057 and the QoS path message generating unit 3058 in the QoS processing unit 3054 have functions for processing and generating messages (such as a QUERY message, a NOTIFY message, a RESERVE message, and a NOTIFY message in NSIS) transmitted and received in relation to the QoS path.

In Fig. 5, described hereafter, the QoS path message generating unit 3058 generates a QUERY message transmitted at Step S1007, a QUERY (A) message transmitted at Step S1015, a RESPONSE message transmitted at Step S1029, and the like. The QoS path message processing unit 3057 processes a QUERY message received at Step S1005, a RESPONSE (A) message received at Step S1023, a RESPONSE message received at Step S1027, and the like.

In addition, the QoS path information storing unit 3059 of the QoS processing unit 3054 has a function for storing various information related to the QoS path processed by the QNE 305 (in other words, the QoS path passing through the QNE 305). The QoS path information storing unit 3059 manages and stores, for example, the QoS path identifying information (such as the session identifier and the flow identifier), information indicating QoS characteristics (QSPEC), and the like. The QNE 305 is present on the edge of the aggregation domain 227 and has knowledge of both the network within the aggregation domain 227 and the network outside of the aggregation domain 227. Therefore, the QNE 305 has knowledge of both the end-to-end QoS path between the QNE (local terminal) 101 and the QNE (partner terminal) 501 and the QoS path for aggregation related to the end-to-end QoS path. The QNE 305 can hold such information related to the inside and the outside of the aggregation domain 227 in the QoS path information storing unit 3059.

The communication managing unit (branching point judging unit) 3055 has a function for judging whether the QNE itself (QNE 305) is the CRN in relation to the QoS path before and after the movement of the QNE (local terminal) 101. The communication managing unit (branching point judging unit) 3055 can know whether the QNE itself (QNE 305) is the relay point in the QoS path for aggregation before the movement of the QNE (local terminal) 101 by referencing whether, for example, the QoS path information storing unit 3059 stores the QoS path information related to the session identifier and the flow identifier of the QoS path for aggregation used before the movement of the QNE (local terminal) 101. When the QNE 305 is the relay point in the QoS path for aggregation before the movement of the QNE (local terminal) 101, the CRN is expected to be present further downstream (on the QNE [local terminal] 101 side) than the QNE 305. Therefore, the QNE 305 can be controlled such that a search for the CRN is not performed within the aggregation domain 227.

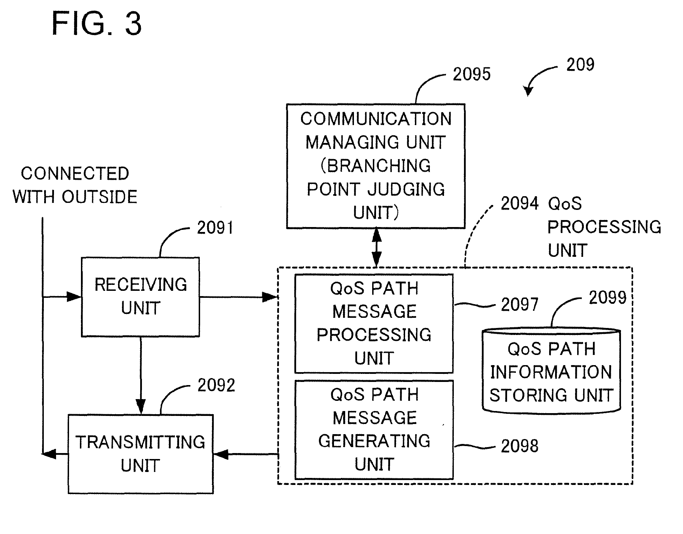

Fig. 3 is an example of a configuration of the QNE 209 that is the relay point of the new QoS path for aggregation established after the movement of the QNE (local terminal) 101 according to the first embodiment of the invention. The QNE 209 shown in Fig. 3 includes a receiving unit 2091, a transmitting unit 2092, a QoS processing unit 2094, and a communication managing unit (branch point judging unit) 2095. The QoS processing unit 2094 includes a QoS path message processing unit 2097, a QoS path message generating unit 2098, and a QoS path information storing unit 2099. Each function of the QNE 209 shown in Fig. 3 can be realized by hardware, software (program), or both.

The receiving unit 2091 and the transmitting unit 2092 have functions for receiving and transmitting data. Packets addressed to the QNE 209, data required to be processed by the QNE 209, and the like are processed in the upper layer. The receiving unit 2091 sends other packets to the transmitting unit 2092. The other packets are transferred as is.

As is the QoS processing unit 3054 shown in Fig. 2, the QoS processing unit 2094 is a block indicating a predetermined QoS function (such as the NSIS QoS function) . In Fig. 5, described hereafter, the QoS path message generating unit 2098 generates a QUERY (A) message transmitted at Step S1019, the RESPONSE (A) message transmitted at Step S1023, and the like. The QoS path message processing unit 2097 processes the QUERY (A) message received at Step S1015, a RESPONSE (A) message received at Step S1021, and the like. The QoS path message generating unit 2098 adds an IP address at Step S1017 in adherence to an instruction from the communication managing unit (branching point judging unit) 2095.

As does the QoS path information storing unit 3059 shown in Fig. 2, the QoS path information storing unit 2099 in the QoS processing unit 2094 stores various information related to the QoS path processed by the QNE 209 (in other words, the QoS path passing through the QNE 209) . However, the QNE 209 is present within the aggregation domain 227. Therefore, the QNE 209 has knowledge of only the QoS path for aggregation within the aggregation domain 227. The QoS path information storing unit 2099 stores only information related to the QoS path for aggregation.

The communication managing unit (branching point judging unit) 2095 has a function for judging whether the QNE itself (QNE 209) is the CRN in relation to the QoS path before and after the movement of the QNE (local terminal) 101. The communication managing unit (branching point judging unit) 2095 can know whether the QNE itself (QNE 209) is the relay point in the QoS path for aggregation before the movement of the QNE (local terminal) 101 by referencing whether, for example, the QoS path information storing unit 2099 stores the QoS path information (information included in the QUERY [A] message received at Step S1015 in Fig. 5, described hereafter) related to the session identifier and the flow identifier of the QoS path for aggregation used before the movement of the QNE (local terminal) 101. Furthermore, the QNE 209 confirms that an IP address is not attached to the received message, compares an adjacent node on the QoS path for aggregation before movement with a transfer source and a transfer destination of the message, or the like. As a result, the QNE 209 can judge whether the QNE itself (QNE 209) is applicable as the CRN (branching point) of the QoS path for aggregation before and after the movement of the QNE (local terminal) 101.

When the communication managing unit (branching point judging unit) 2095 recognizes that the QNE 209 itself is applicable as the CRN of the QoS path for aggregation before and after the movement of the QNE (local terminal) 101, the communication managing unit (branching point judging unit) 2095 instructs the QoS path message generating unit 2098 to add an interface IP address of the QNE 209 itself within a CRN retrieval message (the QUERY [A] message transmitted at Step S1019 in Fig. 5 described hereafter).

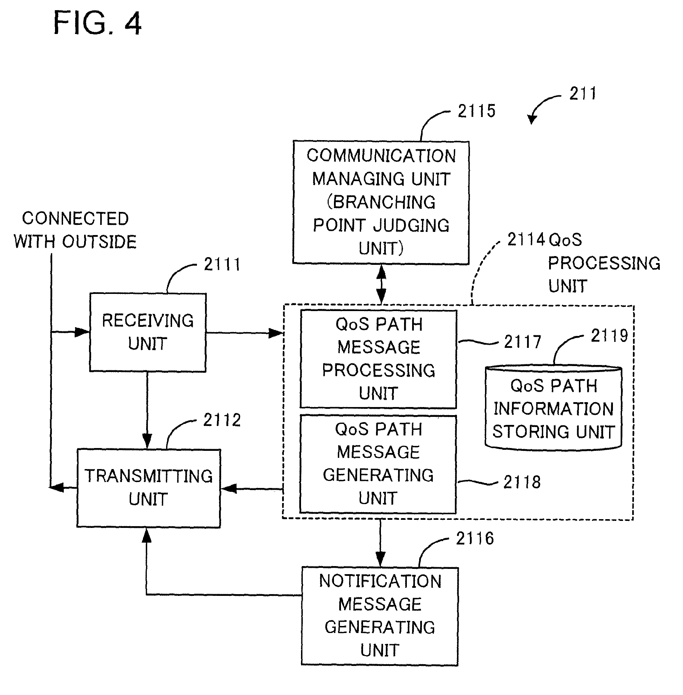

Fig. 4 is an example of a configuration of the QNE 211 that is an endpoint in an upstream end of the new QoS path for aggregation established after the movement of the QNE (local terminal) 101 according to the first embodiment of the invention. The QNE 211 shown in Fig. 4 includes a receiving unit 2111, a transmitting unit 2112, a QoS processing unit 2114, a communication managing unit (branching point judging unit) 2115, and a notification message generating unit 2116. The QoS processing unit 2114 includes a QoS path message processing unit 2117, a QoS path message generating unit 2118, and a QoS path information storing unit 2119. Each function of the QNE 211 shown in Fig. 4 can be realized by hardware, software (program), or both.

The receiving unit 2111 and the transmitting unit 2112 have functions for receiving and transmitting data. Packets addressed to the QNE 211, data required to be processed by the QNE 211, and the like are processed in the upper layer. The receiving unit 2111 sends other packets to the transmitting unit 2112. The other packets are transferred as is.

As is the QoS processing unit 3054 shown in Fig. 2, the QoS processing unit 2114 is a block indicating a predetermined QoS function (such as the NSIS QoS function). In Fig. 5, described hereafter, the QoS path message generating unit 2118 generates a QUERY message transmitted at Step S1011, the RESPONSE (A) message transmitted at Step S1021, the RESPONSE message transmitted at Step S1027, and the like. The QoS path message processing unit 2117 processes the QUERY (A) message received at Step S1007, the QUERY (A) message received at Step S1019, a RESPONSE message received at Step S1025, and the like. The QoS path message generating unit 2118 adds the IP address at Step S1009 in adherence to an instruction from the communication managing unit (branching point judging unit) 2115. When a message related to the end-to-end QoS path (the QUERY message at Step S1007 in Fig. 5 described hereafter) is received, the QoS processing unit 2114 notifies the notification message generating unit 2116 of the reception of the message.

As does the QoS path information storing unit 3059 shown in Fig. 2, the QoS path information storing unit 2119 in the QoS processing unit 2114 stores various information related to the QoS path processed by the QNE 211 (in other words, the QoS path passing through the QNE 211). The QNE 211 is present on the edge of the aggregation domain 227, as is the QNE 305. The QoS path information storing unit 2119 can store information related to the inside and the outside of the aggregation domain 227.

The communication managing unit (branching point judging unit) 2115 has a function for judging whether the QNE itself (QNE 211) is the CRN in relation to the QoS path before and after the movement of the QNE (local terminal) 101. The communication managing unit (branching point judging unit) 2115 can know whether the QNE itself (QNE 211) is the relay point in the QoS path for aggregation before the movement of the QNE (local terminal) 101 by referencing whether, for example, the QoS path information storing unit 2119 stores the QoS path information (information included in the QUERY [A] message received at Step S1019 in Fig. 5, described hereafter) related to the session identifier and the flow identifier of the QoS path for aggregation used before the movement of the QNE (local terminal) 101. The QNE 211 can judge both whether the QNE 211 itself is the CRN of the end-to-end QoS path and whether the QNE 211 itself is the CRN of the QoS path for aggregation. When the QNE 211 is not the CRN of the end-to-end QoS path, the CRN is expected to be present further upstream (on the QNE [partner terminal] 501 side) that the QNE 211. Therefore, the QNE 211 can be controlled such that the search for the CRN is not performed within the aggregation domain 227.

The notification message generating unit 2116 has a function for generating a notification message (a message transmitted at Step S1013 in Fig. 5 described above) to be transmitted to the QNE 305, with a message related to the end-to-end QoS path (the QUERY message at Step S1007 in Fig. 5 described above) serving as a trigger. The notification message is for requesting preparation to establish the QoS path for aggregation. The notification message processing unit 3053 of the QNE 305, shown in Fig. 2, processes the notification message.

Configurations of the QNE (local terminal) 101, the QNE 303 operating as a proxy, and the like shown in Fig. 1 can be realized through the same configuration as that of the conventional technology (the configuration described in the Non-Patent Document 3, described above). The QNE (partner terminal) 501 can also be realized through the conventional technology. The QNE 501 is, for example, only required to have functions complying with the current NSIS QoS.

Next, an example of an operation according to the first embodiment of the invention will be described. Fig. 5 is a sequence chart of the example of the operation according to the first embodiment of the invention. Here, session identifier 1 and a flow identifier 1 are used in the end-to-end QoS path to perform a QoS resource reservation in the end-to-end QoS path. The session identifier 1, a session identifier binding information, and a flow identifier 2 are used in the QoS path for aggregation perform a QoS resource reservation in the QoS path for aggregation.

When the QNE (local terminal) 101 decides to move from the (current) subnet 201 before movement to the new subnet 301 (Step S1001), before moving to the new subnet 301, the QNE (local terminal) 101 transmits a message to a proxy (the QNE 303 in this case) in the subnet 301 that is the destination (Step S1003). The message includes a session identifier (the session identifier 1) used end-to-end in the current communication with the QNE (partner terminal) 501. A plurality of pieces of flow information may correspond to the session identifier 1. Therefore, an identifier (such as current flow information [the flow identifier 1]) can be added to the above-described message to specify the flow to which the preparation to establish the new QoS path is performed. The message transmitted from the QNE (local terminal) 101 to the QNE 303 can be a message already existing in the NSIS QoS (such as the QUERY message or the NOTIFY message) that has been expanded.

Here, the QNE 303 is selected as the proxy in the subnet 301 that is the destination, while the QNE (local terminal) 101 is connected to the subnet 201. However, an arbitrary method can be used as the method for identifying the proxy. For example, a following method is given as a proxy identifying method. The QNE (local terminal) 101 holds correspondence information related to surrounding proxies in advance. Upon receiving L2 information (a beacon that can be heard from an access point within the subnet 301 while the QNE [local terminal] 101 is connected to the subnet 201 or the like) from the access point within the subnet 301, the QNE (local terminal) 101 references the correspondence information mentioned above and identifies a selectable proxy when moving to the subnet 301.

Here, proxy selection and message transmission are performed before the QNE (local terminal) 101 moves to the new subnet 301, such that prompt QoS resource reservation is realized in correspondence with the movement of the QNE (local terminal) 101. However, the QNE (local terminal) 101 itself can transmit the QUERY message transmitted at Step S1005, described hereafter, after moving to the subnet 301.

The QNE 303 that receives the above-described message including the session identifier 1 from the QNE (local terminal) 101 generates a message (the QUERY message is used in this case) including the session identifier 1 and transmits the generated message towards the QNE (partner terminal) 501 (Step S1005). When the message received from the QNE (local terminal) 101 includes information of the flow identifier 1, the information of the flow identifier 1 can also be included in the QUERY message and the QUERY message can be transmitted.

The QUERY message transmitted at Step S1005 is received by a router (QNE) supporting the end-to-end QoS over the path from the QNE 303 to the QNE (partner terminal) 501. Therefore, in the configuration shown in Fig. 1, the QNE 305 receives the QUERY message transmitted from the QNE 303.

The QNE 305 that receives the QUERY message transmitted from the QNE 303 at Step S1005 confirms whether the QNE 305 has a resource reservation for the session identifier 1 included in the QUERY message. When the information of the flow identifier 1 is included in the QUERY message, the QNE 305 confirms whether QNE 305 has the resource reservation for the session identifier 1 and the flow identifier 1 pair. Here, the QNE 305 does not have the resource reservation for the session identifier 1. Therefore, the QNE 305 performs a normal QUERY process and transmits the QUERY message to the next router (QNE 211) supporting the end-to-end QoS (Step S1007). The QNE 305 is on the edge of the aggregation domain 227. The QNE 305 can add a flag to the QUERY message that enables the QNE within the aggregation domain 227 to ignore the QUERY message, and the QUERY message can be transmitted.

Next, the QNE 211 (the router supporting the end-to-end QoS) that receives the QUERY message transmitted from the QNE 305 confirms whether the QNE 211 has a resource reservation for the session identifier 1 included in the QUERY message. The QNE 211 is positioned on the QoS path of the communication between the QNE (local terminal) 101 before movement and the QNE (partner terminal) 501. The QNE 211 has the resource reservation for the session identifier 1 of the end-to-end QoS path. Therefore, the QNE 211 adds the interface IP address to the QUERY message (Step S1009) . The resource reservation for the session identifier 1 is set in the interface IP address. The QNE 211 performs the normal QUERY process and transmits the QUERY message to the next router (QNE [partner terminal] 501) supporting the end-to-end QoS (Step S1011).

The QNE 211 is a router supporting the QoS path for aggregation. The QNE 211 is also present on the QoS path for aggregation related to the communication between the QNE (local terminal) 101 before movement and the QNE (partner terminal) 501. The QNE 211 has information related to both the end-to-end QoS path and the QoS path for aggregation related to the communication between the QNE (local terminal) 101 before movement and the QNE (partner terminal) 501. In other words, the QNE 211 recognizes that the QNE 211 itself is the exit of the QoS path for aggregation. The QNE 211 knows the flow identifier (flow identifier 2) used in the QoS path for aggregation.

The QNE 211 performs a QUERY message transmission process at Step S1011. Simultaneously, the QNE 211 transmits a message (notification message) in the direction of the transmission source (in other words, QNE 303) of the QUERY message received by the QNE 211 (Step S1013). The message is to request preparation to establish the QoS path for aggregation establishment. The message can be a QUERY message or a NOTIFY message, which are pre-existing NSIS QoS messages, that has been expanded. Here, when the QNE 211 has the resource reservation for the session identifier 1 of the end-to-end QoS path is described. When the QNE 211 does not have the resource reservation for the session identifier 1 of the end-to-end QoS path, it is assumed that the CRN is not present within the aggregation domain 227. In this case, the QNE 221 can be controlled such that the search for the CRN is not performed within the aggregation domain 227 during subsequent processes.

The QNE 211 inserts the session identifier 1 into the message transmitted at Step S1013. The binding information of the session identifier 1 can be included in the message. Furthermore, when the information of the flow identifier 1 is included in the QUERY message transmitted at Step S1007, the flow identifier 2 of the QoS path for aggregation can also be included.

The message transmitted from the QNE 211 at Step S1013 requests that the QNE 305 (the router on the edge of the aggregation domain 227) present on the path from the QNE 303 to the QNE (partner terminal) 501 prepare to establish the QoS path for aggregation within the aggregation domain 227.

The QNE 305 that receives the message transmitted from the QNE 211 at Step S1013 generates the message (the QUERY [A] message described hereafter) transmitted towards the transmission source (QNE 211) of the message at Step S1013. The message includes the session identifier 1. The QUERY (A) message can also include the flow identifier 2 of the QoS path for aggregation and be transmitted. Moreover, the QUERY (A) message can also include the binding information of the session identifier 1.

The QNE 305 simultaneously confirms whether the QNE 305 has the resource reservation for the session identifier 1. When the information of the flow identifier 2 is included in the message transmitted from the QNE 211 at Step S1013, the QNE 305 confirms whether the QNE 305 has the resource reservations for the session identifier 1 and the flow identifier 2 pair. Here, the QNE 305 does not have the resource reservation for the session identifier 1. Therefore, the QNE 305 performs the normal QUERY process and transmits the QUERY (A) message to the next router (QNE 209) supporting the QoS for aggregation (Step S1015). In the present specifications, to differentiate the QUERY message requesting preparation to establish the end-to-end QoS path and the QUERY message requesting preparation to0 establish the QoS path for aggregation, the QUERY message requesting the preparation to establish the QoS path for aggregation is referred to as the QUERY (A) message.

The QNE 305 present on the edge of the aggregation domain 227, for example, receives the QUERY message transmitted from the QNE 303 at Step S1005. Upon confirmation that the QNE 305 does not have the resource reservation for the session identifier 1 included in the QUERY message, the QNE 305 can transmit the QUERY (A) message. In this case, message transmission from the QNE 211 at Step S1013 is not necessarily required to be performed.

The QNE 209 that receives the QUERY (A) message transmitted from the QNE 305 at Step S1015 confirms whether the QNE 209 has the resource reservation for the session identifier 1. The QNE 209 is positioned on the QoS path of the communication between the QNE (local terminal) 101 before movement and the QNE (partner terminal) 501. The QNE 209 has the resource reservation for the session identifier 1 of the QoS path for aggregation. Therefore, the QNE 209 adds the interface IP address (identifying information) to the QUERY (A) message (Step S1017). The resource reservation for the session identifier 1 is set in the interface IP address. The QNE 209 performs the normal QUERY process and transmits the QUERY (A) message to the next router (QNE 211) supporting the QoS for aggregation (Step S1019). Upon confirmation that the IP address of another QNE is not added to the received QUERY (A) message and the QNE 209 itself has the resource reservation for the session identifier 1 of the QoS path for aggregation, the QNE 209 can recognize that the QNE 209 itself is the CRN related to the modification of the QoS path for aggregation caused by the movement of the QNE (local terminal) 101.

The QNE 209 transmits the QUERY (A) message to the QNE 211. The QNE 211 also confirms whether the QNE 211 has the resource reservation for the session identifier 1 included in the QUERY (A) message. The QNE 211 is the endpoint of the QoS path for aggregation used before the movement of the QNE (local terminal) 101. The QNE 211 has the resource reservation for the session identifier 1. However, the QNE 211 can detect that the IP address of the QNE 209 is already added to the QUERY (A) message and omit the confirmation process described above. When the QUERY (A) message includes the binding information of the session identifier 1 and the QNE 211 confirms whether the QNE 211 has the resource reservation for the session identifier 1 within the aggregation domain 227, the QNE 211 can also simultaneously confirm whether the QNE 211 has the resource reservation for the binding information of the session identifier 1.

When the QUERY (A) message transferred from the QNE 209 to the QNE 211 passes through another QNE or a plurality of QNEs (not shown) can also be considered. In this case, even when the QNE transferring the message has the resource reservation for the session identifier 1 included in the QUERY (A) message, the QNE preferably transfers the message as is, without adding the IP address. The QNE transferring the message can add the IP address when the QNE has the resource reservation for the session identifier 1 included in the QUERY (A) message. However, in this case, message format is preferably set such that a recipient of the message can identify the IP address of the first QNE to add the IP address (in this case, the QNE 209).

Here, the QNE 209 judges that the QNE 209 has the resource reservation for the session identifier 1 included in the QUERY (A) message and adds its own IP address. More specifically, for example, the QNE 209 can reference the transfer source and the transfer destination of the QUERY (A) message and a previous hop and a next hop on the QoS path for aggregation of the session identifier 1. When confirmation is made that the transfer source of the message and the next hop on the QoS path for aggregation of the session identifier 1 differ but the transfer destination of the message and the previous hop on the QoS path for aggregation of the session identifier 1 are the same, the QNE 209 itself is the CRN. The QNE 209 adds its IP address to the message.

The QNE 211 copies the information added to the QUERY (A) message to a RESPONSE (A) message transmitted in response to the QUERY (A) message. The QNE 211 transmits the RESPONSE (A) message towards the QNE 305 (Step S1021) . In the present specifications, to differentiate the response message (RESPONSE message) for the QUERY message related to the end-to-end QoS and the response message for the QUERY (A) message, the response message for the QUERY (A) message is referred to as the RESPONSE (A) message. After intercepting the RESPONSE (A) message, the QNE 209 transmits the RESPONSE (A) message to the QNE 305 (Step S1023).

The information added to the QUERY (A) message can be used as information for identifying the CRN related to the modification of the QoS path for aggregation caused by the movement of the QNE (local terminal) 101. In other words, here, the IP address of the QNE 209 is added to the QUERY (A) message. The IP address of the QNE 209 is copied within the RESPONSE (A) message. As a result, the QNE 305 that has received the RESPONSE (A) message can identify the CRN within the aggregation domain 227 from the content of the RESPONSE (A) message. When the IP address of a certain QNE is not included within the RESPONSE (A) message, the QNE 305 recognizes that the CRN is not present within the aggregation domain 227. As is a conventional RESPONSE message, the RESPONSE (A) message includes the availability status of the QoS resources in each QNE. The QNE 305 can know the availability status of the QoS resources in each QNE for the QoS path for aggregation.

At the same time, the QUERY message transmitted from the QNE 211 at Step S1011 reaches the QNE (partner terminal) 501. The QNE (partner terminal) 501 copies the information added to the QUERY message to the RESPONSE message. The QNE (partner terminal) 501 transmits the RESPONSE message towards the QNE 303 such as to follow the path by which the QUERY message has been transmitted in reverse (Step S1025). In other words, the RESPONSE message transmitted from the QNE (partner terminal) 501 reaches the QNE 303 after being transferred by the QNE 211 and the QNE 305 (Step S1027 and Step S1029).

In this way, the RESPONSE message is sent to the QNE 303 (in other words, the proxy). From the content of the RESPONSE message, the QNE 305 can identify the availability status of the QoS resources on the end-to-end QoS path and the CRN on the end-to-end QoS path.

The QNE 211 knows the information (such as the IP address) on the QNE (QNE 207) that is the entrance of the aggregation domain 227 for the flow before the movement of the QNE (local terminal) 101. Therefore, the QNE 211 can include the information on the QNE 207 in the message at Step S1013 and Step S1027 and transmit the message to the QNE 305. In this case, after identifying the CRN present within the aggregation domain 227, the QNE 305 can obtain information required to establish the QoS path for aggregation from the QNE 207.

### <Second Embodiment>

Next, the second embodiment of the invention will be described. Here, when the data flows in the downlink direction (the direction from the QNE [partner terminal] 501 to the QNE [local terminal] 101) will be described. According to the second embodiment of the invention, the direction of the data flow is the opposite. NSIS messages, such as the QUERY message, are also required to be transferred in the downlink direction. Here, when the QNE (local terminal) 101 is configured to notify the QNE (partner terminal) 501 of required information and to request preparation to establish a new QoS path based on the movement of the QNE (local terminal) 101 will be described.

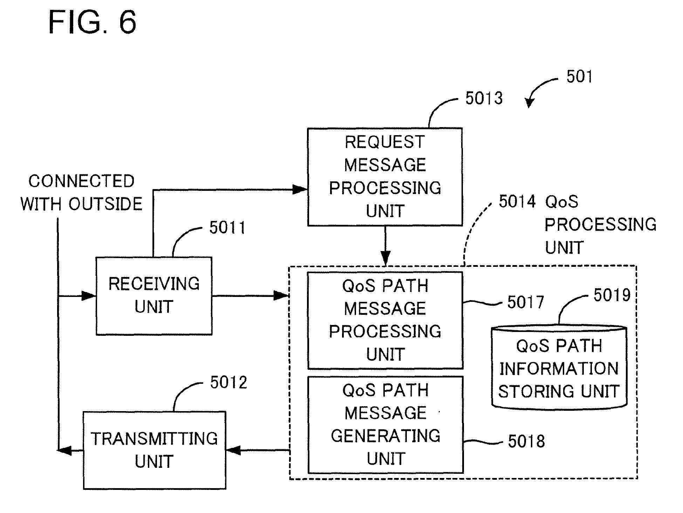

Fig. 6 is an example of a configuration of the QNE (partner terminal) 501 that is the communication partner of the QNE (local terminal) 101. The QNE (partner terminal) 501 shown in Fig. 6 includes a receiving unit 5011, a transmitting unit 5012, a request message processing unit 5013, and a QoS processing unit 5014. The QoS processing unit 5014 includes the QoS path message processing unit 5017, the QoS path message generating unit 5018, and the QoS path information storing unit 5019. Each function of the QNE (partner terminal) 501 shown in Fig. 6 can be realized by hardware, software (program), or both.

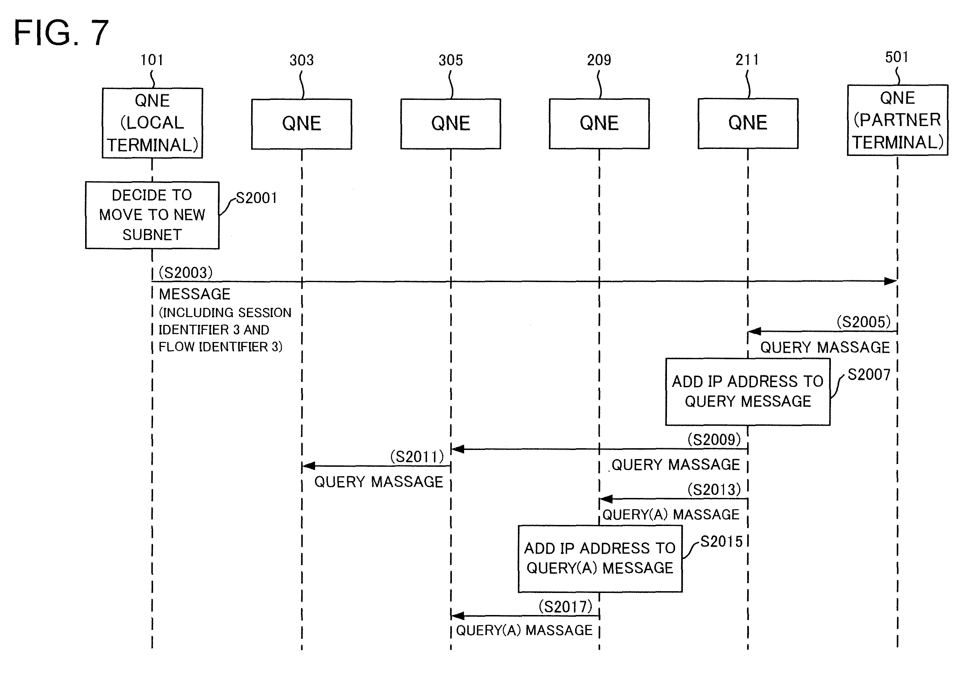

The receiving unit 5011 and the transmitting unit 5012 have functions for receiving and transmitting data. The request message processing unit 5013 has a function for performing a process related to a request message (a message transmitted at Step S2003 in Fig. 7 described hereafter) transmitted from the QNE (local terminal) 101. The request message requests preparation to establish the new QoS path in accompaniment with the movement of the QNE (local terminal) 101. The request message includes the session identifier of the end-to-end QoS path, the IP address of the proxy (such as the QNE 303) in the subnet 301 that is the destination, the information of the flow identifier, and the like. The request message processing unit 5013 extracts the above-described information from the request message and sends the extracted information to the QoS processing unit 5014.

The QoS processing unit 5014 is a block indicating a predetermined QoS function (such as the NSIS QoS function). The QoS path message processing unit 5017 and the QoS path message generating unit 5018 in the QoS processing unit 5014 have functions for processing and generating messages (such as the QUERY message, the NOTIFY message, and the RESERVE message in NSIS) transmitted and received in relation to the QoS path. The QoS path message generating unit 5018 generates a QUERY message transmitted at Step S2005 in Fig. 7, described hereafter. The QoS path information storing unit 5019 in the QoS processing unit 5014 has a function for storing various information related to the QoS path used by the QNE (partner terminal) 501.

The QoS processing unit 5014 uses the information extracted from the request message by the request message processing unit 5013 and starts the preparation to establish the new QoS path in accompaniment with the movement of the QNE (local terminal) 101. Specifically, for example, the QoS path message generating unit 5018 generates a CRN retrieval message including a session identifier and a flow identifier and transmits the CRN retrieval message to the proxy (QNE 303) extracted from the request message.

Next, an example of an operation according to the second embodiment of the invention will be described. Fig. 7 is a sequence chart of the example of the operation according to the second embodiment of the invention. Here, a session identifier 3 and a flow identifier 3 are used in the end-to-end QoS path to perform the QoS resource reservation in the end-to-end QoS path. The session identifier 3, session identifier binding information, and flow identifier 4 are used in the QoS path for aggregation to perform the QoS resource reservation in the QoS path for aggregation.

When the QNE (local terminal) 101 decides to move from the (current) subnet 201 before movement to the new subnet 301 (Step S2001), for example, the QNE (local terminal) 101 transmits a message (request message) to the QNE (partner terminal) 501 before moving (Step S2003). The message is to prepare to establish a new QoS path and includes the session identifier 3 and the IP address of the proxy (QNE 303 in this case) in the subnet 301 that is the destination. The message can further include the information of the flow identifier 3.

As according to the first embodiment of the invention described above, an arbitrary method can be used as the method for identifying the proxy in the subnet 301 of the destination. After moving to the subnet 301, the QNE (local terminal) 101 can transmit the above-described message to the QNE (partner terminal) 501. The message sent here can be a message (such as the QUERY message or the NOTIFY message) already existing in the NSIS QoS that has been expanded.

In the above-described method, before moving to the new subnet 301, the QNE (local terminal) 101 directly transmits a message including the session identifier 3 and the IP address of the QNE 303 (in addition to the flow identifier 3) to the QNE (partner terminal) 501. However, for example, the QNE (local terminal) 101 can send a message including the session identifier 3 (and the flow identifier 3) to the QNE 303 (proxy). The QNE 303 can transmit the above-described message to the QNE (partner terminal) 501.

The QNE (partner terminal) 501 that receives the message at Step S2003 references the message and generates a message (the QUERY message is used in this case) including the session identifier 3. The QNE (partner terminal) 501 transmits the generated message towards the QNE 303 (Step S2005). When the message received from the QNE (local terminal) 101 includes the information of the flow identifier 3, the information of the flow identifier 3 can also be included in the QUERY message and transmitted.

The QNE 211 that receives the QUERY message transmitted from the QNE (partner terminal) 501 at Step S2005 confirms whether the QNE 211 has the resource reservation for the session identifier 3 included in the QUERY message. When the information of the flow identifier 3 is included in the QUERY message, the QNE 211 confirms whether the QNE 211 has the resource reservation for the session identifier 3 and the flow identifier 3 pair.

The QNE 211 is positioned on the QoS path of the communication between the QNE (local terminal) 101 before movement and the QNE (partner terminal) 501. The QNE 211 has the resource reservation for the session identifier 3 of the end-to-end QoS path. Therefore, the QNE 211 adds the interface IP address to the QUERY message (Step S2007). The resource reservation for the session identifier 3 is set in the interface IP. The QNE 211 performs the normal QUERY processing and transmits the QUERY message to the next router (QNE 305) supporting the end-to-end QoS path (Step S2009). The QNE 211 is present on the edge of the aggregation domain 227. The QNE 211 can add a flag to the QUERY message that enables the QNE within the aggregation domain 227 to ignore the QUERY message, and the QUERY message can be transmitted.

The QNE 305 that receives the QUERY message transmitted from the QNE 211 at Step S2009 confirms whether the QNE 211 has the resource reservation for the session identifier 3 included in the QUERY message. When the information of the flow identifier 3 is included in the QUERY message, the QNE 305 confirms whether the QNE 305 has the resource reservation for the session identifier 3 and the flow identifier 3 pair. Here, the QNE 305 does not have the resource reservation for the session identifier 3. Therefore, the QNE 305 performs the normal QUERY process and transmits the QUERY message to the next router (QNE 303) supporting the end-to-end QoS (Step S2011) .

The QUERY message transmitted from the QNE 305 at Step S2011 reaches the proxy (in other words, the QNE 303) in the subnet 301 that is the destination. After the confirmation of whether the QNE 303 has the resource reservation for the session identifier 3, the QNE 303 can identify the availability status of the QoS resources in the end-to-end QoS path and the CRN in the end-to-end QoS path from the content of the QUERY message.

At the same time, simultaneously with the transmission of the QUERY message at Step S2009, the QNE 211 generates the message (QUERY [A] message) to be transmitted towards the QNE 305 present on the edge of the aggregation domain 227. The QNE 211 transmits the QUERY (A) message to the next router (QNE 209) supporting the QoS for aggregation (Step S2013). The QUERY (A) message includes the session identifier 3. The flow identifier 4 of the QoS path for aggregation can be included in the message and the message can be sent. Furthermore, the QUERY (A) message can include the binding information of the session identifier 3.

The QNE 209 that receives the QUERY (A) message transmitted from the QNE 211 at Step S2013 confirms whether the QNE 209 has the resource reservation for the session identifier 3. The QNE 209 is positioned on the QoS path of the communication between the QNE (local terminal) 101 before movement and the QNE (partner terminal) 501. The QNE 201 has the resource reservation for the session identifier 3 of the QoS path for aggregation. Therefore, the QNE 209 adds the interface IP address to the QUERY (A) message (Step S2015). The resource reservation for the session identifier 3 is set in the interface IP address. The QNE 209 performs the normal QUERY process and transmits the QUERY (A) message to the next router (QNE 305) supporting the QoS for aggregation (Step S2017) . Upon confirmation that the IP address of another QNE is not included in the received QUERY (A) message and that the QNE 209 itself has the resource reservation for the session identifier 3 of the QoS path for aggregation, the QNE 209 can recognize that the QNE 209 itself is the CRN related to the modification of the QoS path for aggregation caused by the movement of the QNE (local terminal) 101.

Furthermore, the QNE 305 that receives the QUERY (A) message from the QNE 209 also confirms whether the QNE 305 has the resource reservation for the session identifier 3 included in the QUERY (A) message. The QNE 305 can identify the availability status of the QoS resource for each QNE within the aggregation domain 227 and the CRN in the QoS path for aggregation from the content of the QUERY (A) message.

The QNE 211 knows the information (such as the IP address) of the QNE (QNE 207) that is the exit of the aggregation domain 227 in the flow before the movement of the QNE (local terminal) 101. Therefore, the QNE 211 can include the information of the QNE 207 in the message at Step S2009 and transmit the message to the QNE 305. In this case, after identifying the CRN present within the aggregation domain 227, the QNE 305 can obtain information required to establish the QoS path for aggregation from the QNE 207.

Each functional block used in the explanations of each embodiment of the present embodiment, described above, can be actualized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI.

The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used.

Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIAL APPLICABILITY

The present invention has the following advantageous effects. The QoS path related to the mobile terminal is established via the aggregation area. When the QoS path is modified in accompaniment to the movement of the mobile terminal, the CRN present within the aggregation domain can be discovered and an efficient QoS path in which a double reservation of resources does not occur can be established. The invention can be applied to a technical field for setting a new path during a handover of a mobile terminal performing a wireless communication. In particular, the invention can be applied to a technical field for setting a new path during a handover of the mobile terminal performing a wireless communication using mobile IPv6 protocol, which is a next-generation Internet protocol. The invention can also be applied to a technical field related to QoS guarantee using NSIS.

## Claims

1. A path setting method used when, when an end-to-end path established between two communication terminals of which at least one terminal is a mobile terminal passes through an aggregation area and the end-to-end path is connected in the aggregation area by an aggregation path, the mobile terminal performs a handover and a new end-to-end path between the two communication terminals is established, the path setting method comprising a step of:
transmitting, by a path managing device that is one endpoint of a second aggregation path, a crossover node retrieval message towards a path managing device that is another endpoint of the second aggregation path to find a crossover node that is positioned within the aggregation area and is of a first aggregation path established before a movement of the mobile terminal and the second aggregation path established after the movement of the mobile terminal.

2. The path setting method according to claim 1, comprising the steps of:
judging, by a node within the aggregation area, whether the node itself is the crossover node of the first aggregation path and the second aggregation path upon receiving the retrieval message; and
adding, by the node within the aggregation area when judged that the node itself is applicable as the crossover node, its own identifying information to the retrieval message and transmitting the retrieval message towards the path managing device that is the other endpoint of the second aggregation path.

3. A path managing device that, when a mobile terminal using an end-to-end path that passes through an aggregation area and is connected by a first aggregation path moves and a new end-to-end path is established, is one endpoint of a new second aggregation path within the aggregation area that connects the new end-to-end path and is positioned on an edge of the aggregation area, the path managing device comprising:
a message transmitting means that transmits a crossover node retrieval message towards a path managing device that is another endpoint of the second aggregation path to find a crossover node that is positioned within the aggregation area and is of a first aggregation path established before a movement of the mobile terminal and the second aggregation path established after the movement of the mobile terminal.

4. The path managing device according to claim 3, wherein the retrieval message includes path identifying information for identifying the first aggregation path.

5. A path managing device that, when a mobile terminal using an end-to-end path that passes through an aggregation area and is connected by a first aggregation path moves and a new end-to-end path is established, is one endpoint of a new second aggregation path within the aggregation area that connects the new end-to-end path and is positioned on an edge of the aggregation area, comprising:
a message receiving means that receives a crossover node retrieval message from a path managing device that is another endpoint of the second aggregation path to find a crossover node that is positioned within the aggregation area and is of a first aggregation path established before a movement of the mobile terminal and the second aggregation path established after the movement of the mobile terminal; and
a crossover identifying means that extracts identifying information of a path managing device applicable as the crossover node added to the retrieval message by the path managing device.

6. A path managing device positioned within an aggregation area, comprising:
a message receiving means that, when a mobile terminal using an end-to-end path that passes through the aggregation area and is connected by a first aggregation path moves and a new end-to-end path is established, receives a retrieval message for retrieving a crossover node of the first aggregation path established before the movement of a mobile terminal and a second aggregation path established after the movement of the mobile terminal, transmitted by a path managing device that is one endpoint of the new second aggregation path within the aggregation area connecting the new end-to-end path and is positioned on an edge of the aggregation area;
a judging means that judges whether the path managing device itself is applicable as the crossover node of the first aggregation path and the second aggregation path upon receiving the retrieval message;
an identifying information adding means that adds its own identifying information to the retrieval message when judged by the judging means that the path managing device itself is applicable as the crossover node; and
a message transferring means that transfers the retrieval message to which its own identifying information has been added towards a path managing device that is another endpoint of the second aggregation path.

7. The path managing device according to claim 6, wherein, when the identifying information is already added to the retrieval message by another path managing device, the message transferring means transfers the retrieval message without the identifying information being added to the retrieval message by the identifying information adding means.

8. The path managing device according to claim 6, comprising:
a path information storing means that stores path information related to an aggregation path passing through the path managing device itself,
wherein the judging means references path identifying information for identifying the first aggregation path included in the retrieval message and, when confirmation is made that path information related to the first aggregation path included in the retrieval message is stored in the path information storing means, the identifying information adding means adds its own identifying information to the retrieval message.

9. The path managing device according to claim 8, wherein, when the identifying information is already added to the retrieval message by another path managing device, the message transferring means transfers the retrieval message without the identifying information being added to the retrieval message by the identifying information adding means.
